# EUROPEAN PATENT APPLICATION

(11) **EP 4 400 390 A1**
(43) Date of publication of application: **17.07.2024**
(21) Application number: 21957979.4
(22) Date of filing: 26.09.2021
(51) Int. Cl.: B62D 6/08

(54) **SIGNAL DETECTION CIRCUIT, DETECTION METHOD, APPARATUS AND VEHICLE**

(71) Applicant: Huawei Technologies Co., Ltd., Shenzhen, Guangdong 518129 (CN)
(72) Inventor: QUE, Fasong, Shenzhen, Guangdong 518129 (CN); CHEN, Xuefeng, Shenzhen, Guangdong 518129 (CN); LIANG, Chen, Shenzhen, Guangdong 518129 (CN)
(74) Representative: Maiwald GmbH
(86) International application number: PCT/CN2021/120701
(87) International publication number: WO 2023/044860

(57) **Abstract**

A signal detection circuit is provided, and includes a first processing circuit, a second processing circuit, a third processing circuit, a fourth processing circuit, a first controller, and a second controller. The first processing circuit, the second processing circuit, the third processing circuit, and the fourth processing circuit are configured to perform filtering and voltage regulation on respective input signals. Both an output end of the first processing circuit and an output end of the third processing circuit are connected to an input end of the first controller. Both an output end of the second processing circuit and an output end of the fourth processing circuit are connected to an input end of the second controller. The first controller is communicatively connected to the second controller. In this way, reliability and safety of torque and angle sensor signal detection can be improved.

## Description

### TECHNICAL FIELD

This application relates to the field of vehicles, and in particular to a signal detection circuit, method, and apparatus, and a vehicle.

### BACKGROUND

With the development of intelligent driving, safety is one of the key issues in the development of future vehicles. An electric power steering system (Electric Power Steering, EPS) is an important part of a vehicle, and reliability of the electric power steering system is very important for vehicle safety.

An existing electric power steering system is usually a single-point single-wire control system. To be specific, each motor winding is equipped with a set of drive circuits. Once a fault occurs, a steering power output may partially or completely fail. Especially, for a detection part for a sensor signal, a fault easily occurs, which causes a great safety risk.

### SUMMARY

In view of the foregoing problems in the conventional technology, this application provides a signal detection circuit, method, and apparatus, and a vehicle, to improve reliability of signal detection and reduce a safety risk.

To achieve the foregoing objective, a first aspect of this application provides a signal detection circuit. The circuit includes: a first processing circuit, a second processing circuit, a third processing circuit, a fourth processing circuit, a first controller, and a second controller. The first processing circuit, the second processing circuit, the third processing circuit, and the fourth processing circuit are configured to perform filtering and voltage regulation on respective input signals. Both an output end of the first processing circuit and an output end of the third processing circuit are connected to an input end of the first controller. Both an output end of the second processing circuit and an output end of the fourth processing circuit are connected to an input end of the second controller. The first controller is communicatively connected to the second controller.

According to the signal detection circuit provided in the first aspect of this application, each controller is provided with at least two processing circuits, and at least two controllers are disposed, so that when a fault occurs in a part of the signal detection circuit, another part of the signal detection circuit may still work normally without being affected, which improves stability and reliability of signal detection.

As a possible implementation of the first aspect, the signal detection circuit further includes a first sensor and a second sensor. The first sensor and the second sensor are configured to detect a torque signal and an angle signal. An output end of the first sensor is connected to an input end of the first processing circuit, and the output end of the first sensor is further connected to an input end of the second processing circuit. An output end of the second sensor is connected to an input end of the third processing circuit, and the output end of the second sensor is further connected to an input end of the fourth processing circuit.

It can be learned from the foregoing that, by disposing at least two data collecting devices (sensors), normal operation of the detection circuit can be prevented from being affected by a fault at a collecting end of the device.

As a possible implementation of the first aspect, the first sensor and the second sensor support a PWM, SENT, or SPC sensor signal type.

As a possible implementation of the first aspect, the first processing circuit includes a voltage regulation circuit and a filter circuit. An input end of the voltage regulation circuit is the input end of the first processing circuit, and an output end of the voltage regulation circuit is connected to an input end of the filter circuit. An output end of the filter circuit is the output end of the first processing circuit. The voltage regulation circuit is capable of supporting a voltage of 5 V or 3.3 V An input signal is processed by using the voltage regulation circuit and the filter circuit, so that a signal format supported by the controller can be obtained.

As a possible implementation of the first aspect, the voltage regulation circuit includes: a first power supply and a first resistor. The first power supply is connected to the first resistor, and a joint between the first power supply and the first resistor is used as the input end of the voltage regulation circuit. One end that is away from the first power supply and is of the first resistor is used as the output end of the voltage regulation circuit.

As a possible implementation of the first aspect, the filter circuit includes: a second resistor, a third resistor, a first capacitor, and a second capacitor. A first end of the second resistor is the input end of the filter circuit, and a second end of the second resistor is connected to a first end of the first capacitor. A first end of the third resistor is connected to the second end of the second resistor, and a second end of the third resistor is connected to a first end of the second capacitor. A second end of the first capacitor is connected to a second end of the second capacitor, and the second end of the first capacitor is further connected to a first ground end.

It can be learned from the foregoing that, a specific connection relationship between components in the voltage regulation circuit and the filter circuit is provided, to implement voltage transformation and filtering on the input signal.

As a possible implementation of the first aspect, the first controller and the second controller are further configured to control a three-phase winding of a motor.

As a possible implementation of the first aspect, the circuit further includes: a power supply and ground that are connected to the first sensor, and a power supply and ground that are connected to the second sensor.

As a possible implementation of the first aspect, the first processing circuit, the second processing circuit, the third processing circuit, and the fourth processing circuit are redundant processing circuits for each other. The four processing circuits are processing circuits with a same circuit structure, so as to implement that the four processing circuits are redundant for each other.

As a possible implementation of the first aspect, the first controller and the second controller are redundant controllers for each other. The two controllers are same controllers, so as to implement controllers that are redundant for each other.

As a possible implementation of the first aspect, the first sensor and the second sensor are redundant sensors for each other. The first sensor and the second sensor are the same, and signal sources of the first sensor and the second sensor for collection are the same.

It can be learned from the foregoing that, two same sensors are disposed to collect data of the same signal source, to implement the two sensors that are redundant for each other.

A second aspect of this application provides a signal detection method. The method includes: receiving a first signal of a first sensor through a first processing circuit, and receiving a third signal of a second sensor through a third processing circuit; receiving a second signal of the first sensor through a second processing circuit, and receiving a fourth signal of the second sensor through a fourth processing circuit; using the first signal or the third signal as an input signal of a first controller when a difference between the first signal and the third signal is less than a first threshold; and using the second signal or the fourth signal as an input signal of a second controller when a difference between the second signal and the fourth signal is less than a second threshold.

As a possible implementation of the second aspect, the method further includes: using the first signal as the input signal of the first controller when the difference between the first signal and the third signal is not less than the first threshold, and a difference between the first signal and the second signal is less than a third threshold.

As a possible implementation of the second aspect, the method further includes: using the third signal as the input signal of the first controller when the difference between the first signal and the third signal is not less than the first threshold, and a difference between the third signal and the fourth signal is less than a fourth threshold.

As a possible implementation of the second aspect, the method further includes: using the second signal as the input signal of the second controller when the difference between the second signal and the fourth signal is not less than the second threshold, and a difference between the first signal and the second signal is less than a third threshold.

In a possible implementation of the second aspect, the method further includes: using the fourth signal as the input signal of the second controller when the difference between the second signal and the fourth signal is not less than the second threshold, and a difference between the third signal and the fourth signal is less than a fourth threshold.

A third aspect of this application provides a signal detection apparatus. The apparatus includes: a first control module, configured to receive a first signal of a first sensor through a first processing circuit, and receive a third signal of a second sensor through a third processing circuit; a second control module, configured to receive a second signal of the first sensor through a second processing circuit, and receive a fourth signal of the second sensor through a fourth processing circuit; a first determining module, configured to use the first signal or the third signal as an input signal of a first controller when a difference between the first signal and the third signal is less than a first threshold; and a second determining module, configured to use the second signal or the fourth signal as an input signal of a second controller when a difference between the second signal and the fourth signal is less than a second threshold.

As a possible implementation of the third aspect, the apparatus further includes: a third determining module, configured to use the first signal as the input signal of the first controller when the difference between the first signal and the third signal is not less than the first threshold, and a difference between the first signal and the second signal is less than a third threshold.

As a possible implementation of the third aspect, the apparatus further includes: a fourth determining module, configured to use the third signal as the input signal of the first controller when the difference between the first signal and the third signal is not less than the first threshold, and a difference between the third signal and the fourth signal is less than a fourth threshold.

As a possible implementation of the third aspect, the apparatus further includes: a fifth determining module, configured to use the second signal as the input signal of the second controller when the difference between the second signal and the fourth signal is not less than the second threshold, and a difference between the first signal and the second signal is less than a third threshold.

As a possible implementation of the third aspect, the apparatus further includes: a sixth determining module, configured to use the fourth signal as the input signal of the second controller when the difference between the second signal and the fourth signal is not less than the second threshold, and a difference between the third signal and the fourth signal is less than a fourth threshold.

A fourth aspect of this application provides a steering system. The steering system includes the signal detection circuit according to the first aspect, a first drive circuit, a second drive circuit, a first three-phase winding, and a second three-phase winding. A first controller in the signal detection circuit, the first drive circuit, and the first three-phase winding are sequentially connected. A second controller in the signal detection circuit, the second drive circuit, and the second three-phase winding are sequentially connected.

A fifth aspect of this application provides a vehicle. The vehicle includes a vehicle body and the steering system provided in the foregoing fourth aspect.

A sixth aspect of this application provides a computer-readable storage medium storing program instructions. When the program instructions are executed by a computer, the computer performs the signal detection method according to the foregoing second aspect.

These aspects and another aspect of this application are more concise and easier to understand in descriptions of the following (a plurality of) embodiments.

### BRIEF DESCRIPTION OF DRAWINGS

The following further describes features of this application and a relationship between the features with reference to the accompanying drawings. The accompanying drawings are all examples, and some features are not shown in actual proportions. In addition, in some accompanying drawings, common features that are not mandatory for this application in the field of this application may be omitted. Alternatively, additional features that are not mandatory for this application are not shown. A combination of the features shown in the accompanying drawings is not intended to limit this application. In addition, in this specification, content referred to by same reference numerals is also the same. The specific accompanying drawings are described as follows:
FIG. 1 is a block diagram of an EPS system in a related technology according to an embodiment of this application;
FIG. 2 is a diagram of an application scenario of a signal detection circuit according to an embodiment of this application;
FIG. 3 is a schematic diagram of a structure of a signal detection circuit according to an embodiment of this application;
FIG. 4 is a specific circuit diagram of a signal detection circuit according to an embodiment of this application;
FIG. 5 is a schematic diagram of a structure of an EPS according to an embodiment of this application;
FIG. 6 is a schematic diagram of a structure of a signal detection apparatus according to an embodiment of this application;
FIG. 7 is a schematic diagram of a structure of a computing device according to an embodiment of this application; and
FIG. 8 is a schematic diagram of a structure of another computing device according to an embodiment of this application.

### DESCRIPTION OF EMBODIMENTS

In this specification and claims, the terms "first, second, third, and the like" or similar terms such as a module A, a module B, and a module C are merely used to distinguish between similar objects, and do not represent a specific order of the objects. It may be understood that specific orders or sequences may be exchanged if permitted, so that the embodiments of this application described herein can be implemented in an order other than an order illustrated or described herein.

In the following descriptions, involved reference numerals such as S110 and S 120 that indicate steps do not necessarily indicate that the steps are to be performed based on the order, and consecutive steps may be transposed if allowed, or may be performed simultaneously.

The term "include" used in this specification and claims should not be construed as being limited to the content listed below, and does not exclude other elements or steps. It should be construed as specifying existence of a mentioned feature, whole, step, or part, but does not preclude existence or addition of one or more other features, wholes, steps, or parts and their groups. Therefore, the expression "a device including an apparatus A and an apparatus B" should not be limited to a device including only the components A and B.

"One embodiment" or "an embodiment" mentioned in this specification indicates that a particular feature, structure or property that is described with reference to the embodiment is included in at least one embodiment of this application. Therefore, the terms "in one embodiment" or "in an embodiment" that appear in this specification do not necessarily indicate a same embodiment, but may indicate a same embodiment. Further, in one or more embodiments, the particular features, structures, or properties can be combined in any proper manner, as will be clear from this disclosure to a person of ordinary skill in the art.

Unless otherwise defined, all technical and scientific terms used in this specification have same meanings as those usually understood by a person skilled in the art of this application. In case of any inconsistency, the meaning described in this specification or the meaning obtained according to the content recorded in this specification shall prevail. In addition, the terms used in this specification are merely for the purpose of describing embodiments of this application, but are not intended to limit this application.

To accurately describe technical content in this application and accurately understand the present invention, before specific implementations are described, the following explanations, descriptions, or definitions are provided for terms used in this specification:
(1) Electric power steering system (Electric Power Steering, EPS): A power steering system that directly relies on a motor to provide auxiliary torque. In embodiments of this application, the EPS includes but is not limited to: a column electric power steering system (Column Electric Power Steering, C-EPS), a pinion electric power steering system (Pinion Electric Power Steering, P-EPS), a rack electric power steering system (Rack Electric Power Steering, R-EPS), and the like.
(2) Electronic control unit (Electronic Control Unit, ECU): The electronic control unit is configured to implement analysis processing for data and implement corresponding control. The electronic control unit is also referred to as a "vehicle computer" and includes a microcontroller unit (Microcontroller Unit, MCU), a memory, an input/output interface, and a drive circuit. The ECU may be usually configured to determine a status of a vehicle and an intention of a driver, and control the vehicle through an executor, to control driving of the vehicle.
(3) Redundancy technology: The redundancy technology is also referred to as a reserve technology, and is a method for improving system reliability by using a parallel model of a system.

The following first analyzes an EPS system according to a related technology.

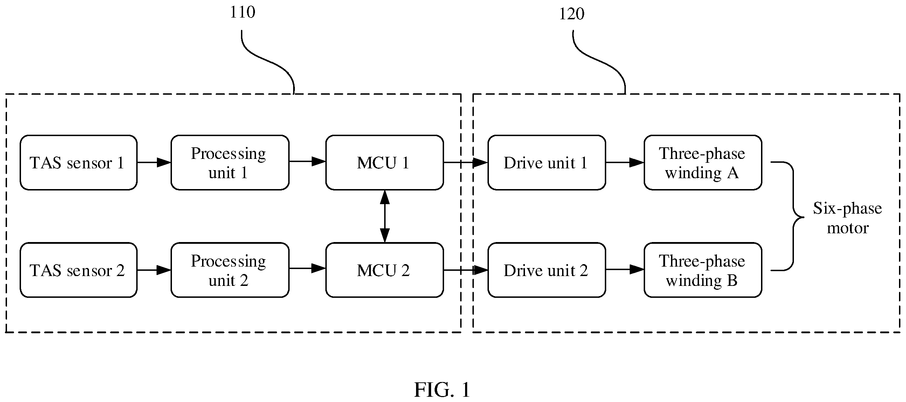

FIG. 1 is a block diagram of an EPS system in a related technology. The EPS system in this solution includes two parts. A first part is a torque and angle sensor signal detection apparatus 110, and a second part is a winding drive part 120. The torque and angle sensor signal detection apparatus 110 includes a first branch and a second branch. The first branch and the second branch are redundant for each other. The first branch includes a torque and angle sensor 1 (Torque and Angle Sensor, TAS), a processing unit 1, and an MUC 1 that are sequentially connected. Likewise, the second branch also includes a TAS sensor 2, a processing unit 2, and an MUC 2 that are sequentially connected. The MUC 1 of the first branch is communicatively connected to the MCU 2 of the second branch. The winding drive part 120 includes a drive unit 1 that drives a three-phase winding A and a drive unit 2 that drives a three-phase winding B. The drive unit 1 is connected to the first branch of the torque and angle sensor signal detection apparatus 110, and the drive unit 2 is connected to the second branch of the torque and angle sensor signal detection apparatus 110. The processing units are configured to perform filtering and voltage regulation on respective input signals.

In the solution, the first branch and the second branch in the torque and angle sensor signal detection apparatus 110 are redundant for each other. When a fault occurs on one of the branches, an MCU of the other branch may transfer a sensor signal collected and obtained on the other branch to the faulty branch, to implement that the faulty branch is driven by using the sensor signal of the other branch, so that reliability of the EPS system is ensured. However, the solution is only applicable to a condition in which one of the branches is disconnected. If the two branches can both collect and obtain sensor signals, but signal values are different, the EPS system cannot determine which branch is faulty and which branch is normal. In this case, erroneously determining may be caused sometimes, and consequently, normal working of the EPS system is affected, and even a safety accident may be caused in severe cases.

Based on research on the related technology and a defect existing in the related technology, an embodiment of this application provides a signal detection circuit. A connection relationship of the signal detection circuit is changed by using a redundancy technology, so that safety and reliability of signal detection are improved without adding a sensor.

The following describes embodiments of this application in detail with reference to the accompanying drawings. First, a scenario to which a signal detection circuit according to an embodiment of this application is applied is described.

The signal detection circuit according to the embodiment of this application is applicable to an intelligent driving technology. Specifically, the signal detection circuit may be applied to a steering system of an autonomous vehicle (AV, Autonomous Vehicle).

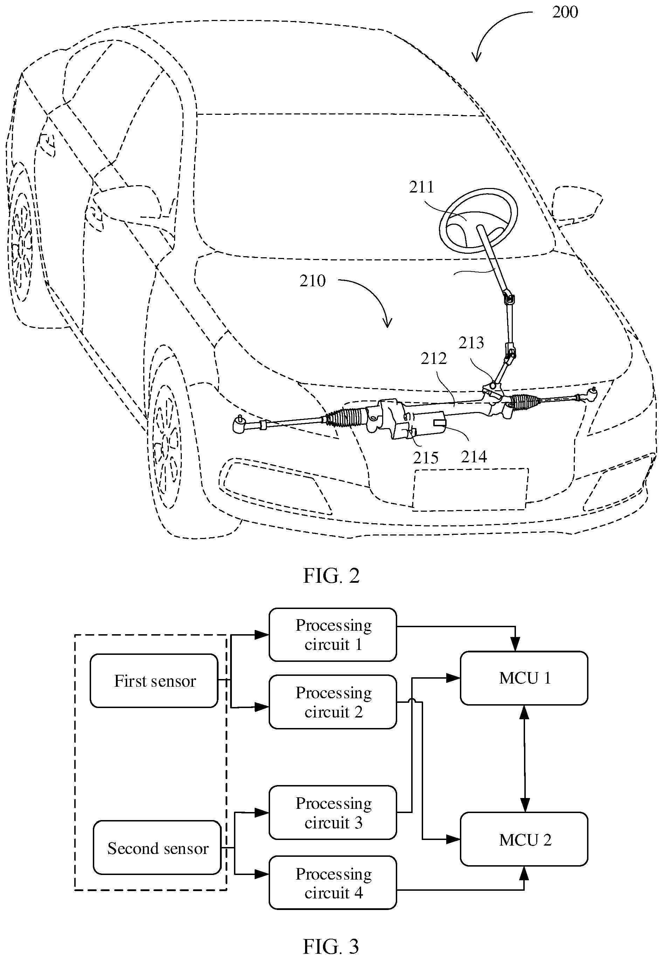

As shown in FIG. 2, a steering system 210 is disposed in a vehicle 200. The steering system 210 includes: a steering wheel 211, a steering shaft 212, a TAS sensor 213, an EPS system 214, and a motor 215. When a driver operates the steering wheel 211 to perform steering, the TAS sensor 213 detects a voltage signal of a rotation direction and a torque value that are of the steering wheel 211, and transmits the voltage signal of the rotation direction and the torque value to the EPS system 214. The EPS system 214 sends an instruction to the motor 215 based on the received voltage signal of the rotation direction and the torque value, so that the motor 215 outputs a power torque of a corresponding direction and a corresponding value, to drive the steering shaft 212 to implement the steering. In this application scenario, the EPS system 214 includes the signal detection circuit according to this embodiment of this application, so that even if a single-point failure occurs in a detection part for a torque and angle sensor signal in the EPS system, a normal sensor signal can still be used to drive the steering system to run, to enable steering control of the steering system to be not degraded. Therefore, Reliability of the steering system and safety of vehicle traveling are improved. The following describes in detail the signal detection circuit according to this embodiment of this application with reference to the figures.

In this embodiment, the following description is provided by using an example in which an input signal of each processing circuit is a torque signal and an angle signal. It should be understood that in another embodiment, the input signal of each processing circuit may be another signal. In this embodiment, the following description is provided by using an example in which each controller is a microcontroller. It should be understood that in another embodiment, each controller may be another controller, which is not specifically limited in this application.

FIG. 3 is a schematic diagram of a structure of a signal detection circuit according to an embodiment of this application. The circuit includes two signal detection branches that are redundant for each other.

In this embodiment, a first signal detection branch includes a first processing circuit (a processing circuit 1 shown in FIG. 3), a second processing circuit (a processing circuit 2 shown in FIG. 3), and a first microcontroller (an MCU 1 shown in FIG. 3). A second signal detection branch includes a third processing circuit (a processing circuit 3 shown in FIG. 3), a fourth processing circuit (a processing circuit 4 shown in FIG. 3), and a second microcontroller (an MCU 2 shown in FIG. 3).

Specifically, the four processing circuits in this embodiment are configured to implement voltage regulation and filtering on respective input signals (a torque signal and an angle signal). The two microcontrollers in this embodiment are configured to perform a signal check on respective input signals (signals processed by the processing circuit). For a specific process of the signal check, refer to the following description of a working principle of the signal detection circuit.

An output end of the first processing circuit in the first signal detection branch is connected to an input end of the first microcontroller, and an output end of the second processing circuit is connected to an input end of the second microcontroller.

An output end of the third processing circuit in the second signal detection branch is connected to the input end of the first microcontroller, and an output end of the fourth processing circuit is connected to the input end of the second microcontroller.

As a possible implementation, the first microcontroller is communicatively connected to the second microcontroller, to implement the signal check.

In this embodiment, an input end of each processing circuit may be connected to a signal collecting device, such as a sensor and the like. As shown in FIG. 3, an input end of the first processing circuit is connected to a first sensor, and an input end of the second processing circuit is also connected to the first sensor. An input end of the third processing circuit is connected to a second sensor, and an input end of the fourth processing circuit is also connected to the second sensor. As a possible implementation, the first sensor and the second sensor may be torque and angle sensors, configured to detect the torque signal and the angle signal.

In this embodiment, the first sensor and the second sensor are redundant sensors for each other. It should be understood that the redundant sensors herein may be sensors having a same model, structure, and the like, or sensors that may implement a function of collecting a same signal, which is not limited in this embodiment. In addition, the first processing circuit, the second processing circuit, the third processing circuit, and the fourth processing circuit in this embodiment are redundant processing circuits for each other. It should be understood that the redundancy processing circuits herein may be processing circuits having a same circuit structure, or circuits that may implement a same processing function, which is not limited in this embodiment. In this embodiment, the first microcontroller and the second microcontroller are redundant controllers for each other. It should be understood that the redundant controller herein may be controllers having a same structure, or controllers that may implement a same control function, which is not limited in this embodiment.

It may be understood that a quantity of detection branches in the signal detection circuit is not limited in this embodiment. In this embodiment, only an example in which there are two detection branches is used for description. In another embodiment, the quantity of detection branches may be any quantity greater than or equal to 2. For example, when there are n detection branches, an output end of an n^{th} data collecting device (for example, a sensor) is connected to input ends of two processing circuits corresponding to the branch separately. An output end of one processing circuit is connected to the input end of the first microcontroller, and an output end of the other processing circuit is connected to the input end of the second microcontroller, where *n* ≥ 2*.*

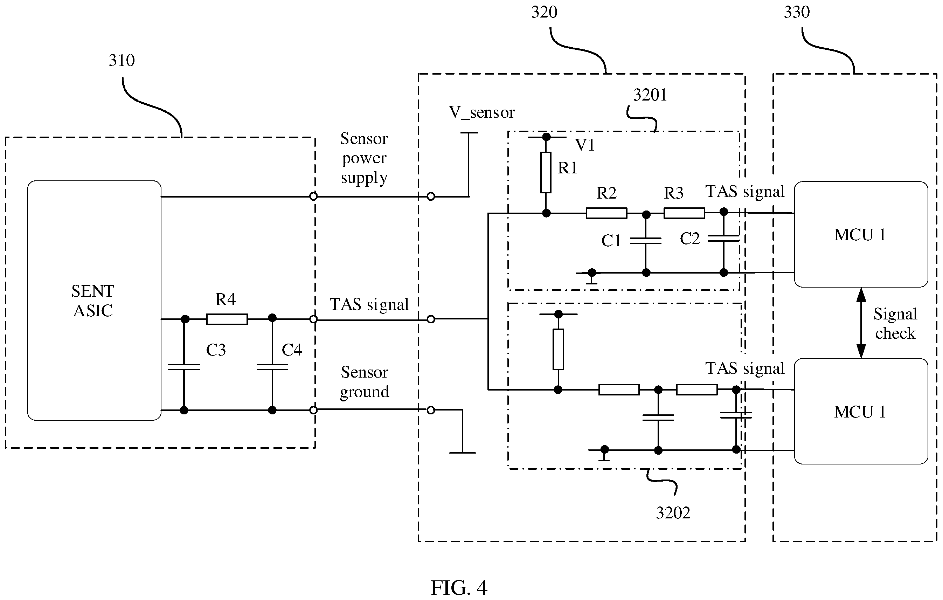

FIG. 4 is a specific circuit diagram of a signal detection circuit according to an embodiment of this application. The circuit diagram includes a data collecting device (a TAS sensor is used as an example herein) part 310, a processing circuit part 320, and a control part 330.

The following first describes the data collecting device part 310 in detail.

Refer to FIG. 4. The data collecting device part 310 mainly includes a sensor chip, two capacitors (a third capacitor and a fourth capacitor), and a resistor (a fourth resistor). The sensor chip is an application-specific integrated circuit (Application-Specific Integrated Circuit, ASIC) that supports single edge nibble transmission (Single Edge Nibble Transmission, SENT). A first end of the sensor chip is connected to a power supply end V_sensor of the sensor. A second end of the sensor chip is connected to a first end of the third capacitor. A third end of the sensor chip is connected to a second end of the third capacitor. The first end of the third capacitor is further connected to a first end of the fourth resistor. A second end of the fourth resistor is connected to a first end of the fourth capacitor. A second end of the fourth capacitor is connected to the second end of the third capacitor, and a connection point between the second end of the fourth capacitor and the second end of the third capacitor is connected to a ground end (sensor ground shown in FIG. 4). In addition, a connection point between the second end of the fourth resistor and the first end of the fourth capacitor is used as an output end of the TAS sensor to be connected to the processing circuit part 320, to transfer a TAS signal collected by the TAS sensor to the processing circuit part 320 for related processing.

The following describes the processing circuit part 320 in detail.

Refer to FIG. 4. The processing circuit part 320 includes at least two processing circuits that are redundant for each other: a processing circuit 3201 and a processing circuit 3202 shown in FIG. 4. It should be understood that the processing circuit 3201 and the processing circuit 3202 are redundant for each other, and are configured to implement voltage transformation and filtering on the TAS signal transferred by the TAS sensor, to obtain a TAS signal that meets an actual operating condition. Circuit structures of processing circuits in the processing circuit part 320 are the same, and therefore, in this embodiment, only the processing circuit 3201 is taken as an example to describe the circuit structure of the processing circuit, and other processing circuits are not described in detail. As shown in FIG. 4, the processing circuit 3201 includes a power supply, three resistors (a first resistor, a second resistor, and a third resistor), and two capacitors (a first capacitor and a second capacitor). The power supply and the first resistor are sequentially connected to form a voltage regulation circuit, to perform voltage transformation on the TAS signal transferred by the TAS sensor. For example, the voltage regulation circuit may match a voltage of 5 V or 3.3 V In addition, the second resistor, the first capacitor, the third resistor, and the second capacitor form two LC filter circuits, to be specific, the second resistor and the first capacitor are connected to form a first-level filter circuit, and the third resistor and the second capacitor are connected to form a second-level filter circuit. The two LC filter circuits are configured to perform double filtering on a signal transferred to the two LC filter circuits. Specifically, a first end of the second resistor is connected to the first resistor in the voltage regulation circuit. A second end of the second resistor is connected to a first end of the first capacitor. A second end of the first capacitor is connected to the ground. A connection point between the second resistor and the first capacitor is connected to the third resistor. A second end of the third resistor is connected to a first end of the second capacitor. A second end of the second capacitor is connected to the second end of the first capacitor. In addition, the second end of the second capacitor and the first end of the second capacitor are used as output ends of the processing circuit 3201 to be connected to the control part 330. It should be understood that a plurality of processing circuits form the processing circuit part 320. The processing circuit part 320 is used to implement the voltage transformation and the filtering on an input signal (the TAS signal).

Then, the control part 330 is described.

Refer to FIG. 4. In this embodiment, the control part 330 may include two microcontrollers that are redundant for each other: an MUC 1 and an MCU 2 shown in FIG. 4. The MCU 1 and the MCU 2 may communicate with each other to perform signal check. For a specific check process of the signal, refer to the following description of a working principle of the signal detection circuit.

The following describes the working principle of the signal detection circuit. The working principle of the signal detection circuit includes two conditions: the signal detection circuit works normally and the signal detection circuit is faulty.

First, when the signal detection circuit works normally:
A TAS sensor 1 sends a collected signal to a processing circuit 1 and a processing circuit 2 for processing separately. Then, a first signal processed by the processing circuit 1 is transferred to the MCU 1, and a second signal processed by the processing circuit 2 is transferred to the MCU 2.

A TAS sensor 2 sends a collected signal to a processing circuit 3 and a processing circuit 4 for processing separately. Then a third signal processed by the processing circuit 3 is transferred to the MCU 1, and a fourth signal processed by the processing circuit 4 is transferred to the MCU 2.

As an optional implementation, the first signal and the third signal that are received by the MCU 1 are compared. When the first signal and the third signal in the MCU 1 are consistent, it indicates that a branch corresponding to the processing circuit 1 and a branch corresponding to the processing circuit 3 are normal. In this case, the first signal or the third signal is used as an input signal of the MCU 1. It should be understood that whether the first signal is used as the input signal of the MCU 1 or the third signal is used as the input signal of the MCU 1 may be determined based on a preset trust for measurement of each branch.

As an optional implementation, "consistent" in this embodiment of this application may be understood as that a difference between two signal values is less than a specified threshold. For example, if a signal value of the first signal in the MCU 1 is a, and a signal value of the third signal value in the MCU 1 is b, a difference between the first signal and the third signal is *a* - *b.* When the difference is less than a specified threshold, it is considered that the first signal and the third signal are consistent. As another optional implementation, "consistent" in this embodiment of this application may alternatively be understood as that an absolute value of a difference between two signal values is less than a specified threshold. For example, if a signal value of the first signal in the MCU 1 is a, and a signal value of the third signal in the MCU 1 is b, an absolute value of a difference between the first signal and the third signal is |*a - b*|. When the absolute value is less than a specified threshold, it is considered that the first signal and the third signal are consistent. In the following embodiments, "consistent" is used to describe this condition.

Refer to the foregoing description. As an optional implementation, "inconsistent" in this embodiment of this application may be understood as that a difference between two signal values is not less than a specified threshold. For example, if a signal value of the first signal in the MCU 1 is a, and a signal value of the third signal in the MCU 1 is b, a difference between the first signal and the third signal is *a* - *b.* When the difference is not less than a specified threshold, it is considered that the first signal and the third signal are inconsistent. As another optional implementation, "inconsistent" in this embodiment of this application may alternatively be understood as that an absolute value of a difference between two signal values is not less than a specified threshold. For example, if a signal value of the first signal in the MCU 1 is a, and a signal value of the third signal in the MCU 1 is b, an absolute value of a difference between the first signal and the third signal is |*a* - *b*|. When the absolute value is not less than a specified threshold, it is considered that the first signal and the third signal are inconsistent. In the following embodiments, "inconsistent" is used to describe this condition.

The second signal and the fourth signal received by the MCU 2 are compared in the following: When the second signal and the fourth signal in the MCU 2 are consistent, it indicates that a branch corresponding to the processing circuit 2 and a branch corresponding to the processing circuit 4 are normal. In this case, the second signal or the fourth signal is used as an input signal of the MCU 2. It should be understood that whether the second signal is used as the input signal of the MCU 2 or the fourth signal is used as the input signal of the MCU 2 may be determined based on a preset trust for measurement of each branch.

Then, when a fault occurs in the signal detection circuit:
The TAS sensor 1 sends a collected signal to the processing circuit 1 and the processing circuit 2 for processing separately. Then, a first signal processed by the processing circuit 1 is transferred to the MCU 1, and a second signal processed by the processing circuit 2 is transferred to the MCU 2.

The TAS sensor 2 sends a collected signal to the processing circuit 3 and the processing circuit 4 for processing separately. Then, a third signal processed by the processing circuit 3 is transferred to the MCU 1, and a fourth signal processed by the processing circuit 4 is transferred to the MCU 2.

Control for the MCU 1:
As an optional implementation, the first signal and the third signal that are received by the MCU 1 are compared. When the first signal and the third signal in the MCU 1 are inconsistent, the second signal in the MCU 2 is transferred to the MCU 1. The first signal and the second signal in the MCU 1 are compared. When the first signal and the second signal in the MCU 1 are consistent, it indicates that the branch corresponding to the processing circuit 1 is normal, and a fault occurs on the branch corresponding to the processing circuit 3. In this case, the first signal is used as the input signal of the MCU 1.

As another optional implementation, the first signal and the third signal that are received by the MCU 1 are compared. When the first signal and the third signal in the MCU 1 are inconsistent, the fourth signal in the MCU 2 is transferred to the MCU 1. The third signal and the fourth signal in the MCU 1 are compared. When the third signal and the fourth signal in the MCU 1 are consistent, it indicates that the branch corresponding to the processing circuit 3 is normal, and a fault occurs on the branch corresponding to the processing circuit 1. In this case, the third signal is used as the input signal of the MCU 1.

### Control for the MCU 2:

As an optional implementation, the second signal and the fourth signal that are received by the MCU 2 are compared. When the second signal and the fourth signal in the MCU 2 are inconsistent, the first signal in the MCU 1 is transferred to the MCU 2. The second signal and the first signal in the MCU 2 are compared. When the second signal and the first signal in the MCU 2 are consistent, it indicates that the branch corresponding to the processing circuit 2 is normal, and a fault occurs on the branch corresponding to the processing circuit 4. In this case, the second signal is used as the input signal of the MCU 2.

As another optional implementation, the second signal and the fourth signal that are received by the MCU 2 are compared. When the second signal and the fourth signal in the MCU 2 are inconsistent, the third signal in the MCU 1 is transferred to the MCU 2. The third signal and the fourth signal in the MCU 2 are compared. When the third signal and the fourth signal in the MCU 2 are consistent, it indicates that the branch corresponding to the processing circuit 4 is normal, and a fault occurs on the branch corresponding to the processing circuit 2. In this case, the fourth signal is used as the input signal of the MCU 2.

It should be understood that the preset thresholds for comparing whether the foregoing signals are consistent may be the same or may be different, which is not limited in this embodiment. It should be understood that, in the foregoing description, that a signal received by the MCU 1 is transferred to the MCU 2 or a signal received by the MCU 2 is transferred to the MCU 1 is optional, which is not limited in this application, as long as the first signal output by the processing circuit 1 is compared with the second signal output by the processing circuit 2, and the third signal output by the processing circuit 3 is compared with the fourth signal output by the processing circuit 4.

In this embodiment of this application, one data collecting device corresponds to a plurality of processing circuits, output signals of the plurality of processing circuits are respectively transferred to different MCUs, and a plurality of data collecting branches are disposed. Such redundancy disposing may improve reliability of signal detection, reduce a safety risk, and ensure a stable operation of a signal detection task even if some faults exist. In addition, in the signal detection according to this embodiment of this application, only a small quantity of resistors and capacitors are added, so that costs are low.

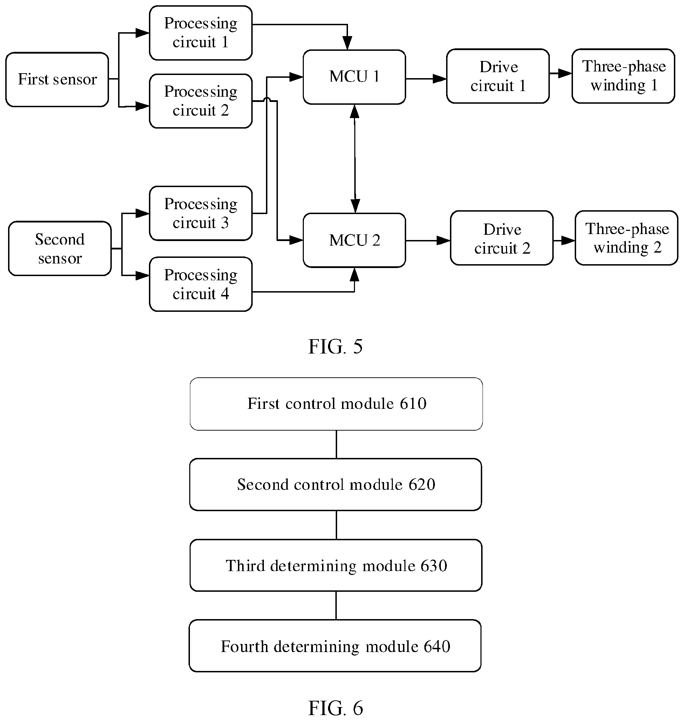

For example, FIG. 5 is a schematic diagram of a structure of EPS according to another embodiment of this application. The EPS includes the signal detection circuit according to the foregoing embodiment, a first drive circuit (a drive circuit 1 shown in FIG. 5), a second drive circuit (a drive circuit 2 shown in FIG. 5), a first three-phase winding (a three-phase winding 1 shown in FIG. 5), and a second three-phase winding (a three-phase winding 2 shown in FIG. 5).

In this embodiment, a first controller in the signal detection circuit, the first drive circuit, and the first three-phase winding are sequentially connected. A second controller in the signal detection circuit, the second drive circuit, and the second three-phase winding are sequentially connected.

As an implementation, two controllers may be used to respectively control two drive circuits, so as to respectively drive corresponding three-phase windings to work. Specifically, the first drive circuit is controlled through an output signal of the first controller, so that an output signal of the first drive circuit drives the first three-phase winding to work. Similarly, the second drive circuit is controlled through an output signal of the second controller, so that an output signal of the second drive circuit drives the second three-phase winding to work.

As another implementation, the first drive circuit and the second drive circuit may be redundant drive circuits. To be specific, when a fault occurs in one of the drive circuits, an output signal of the other drive circuit may be used to separately drive two three-phase windings (the three-phase winding 1 and the three-phase winding 2). As an implementation, the first drive circuit and the second drive circuit need to be communicatively connected (not shown in the figure). Specifically, when a fault occurs in one of the drive circuits, an output signal of the other drive circuit is transmitted to the faulty drive circuit, and a received signal is used to drive corresponding three-phase windings to work. As another implementation, output ends of the drive circuits may be connected to the two three-phase windings, to be specific, an output end of the drive circuit 1 is connected to the three-phase winding 1 and the three-phase winding 2, and an output end of the drive circuit 2 is connected to the three-phase winding 1 and the three-phase winding 2 (not shown in the figure). When the two drive circuits are normal, the corresponding three-phase windings may be driven to work based on a preset driving manner. When a fault occurs in one of the drive circuits, a normal drive circuit is used to drive the two three-phase windings to work. In this way, a stable operation of the three-phase windings is ensured.

It should be understood that a quantity of three-phase windings being 2 in this embodiment is merely an example for description. In another embodiment, the quantity of three-phase windings may be set based on a working condition. As an implementation, the quantity of three-phase windings may be determined based on a quantity of motor windings. For example, when a motor needs to be driven by a twelve-phase winding, four three-phase windings should be disposed in this case. For another example, when a motor needs to be driven by only a three-phase winding, only one three-phase winding is required in this case.

It should be understood that, for a process of determining an input signal in each controller, refer to a process of determining each controller signal in the signal detection circuit in the foregoing embodiment. Therefore, details are not described herein again.

In addition, an embodiment of this application further provides a vehicle with the foregoing EPS. The vehicle may be any vehicle, for example, a household car, a truck, or special vehicles such as an ambulance, a fire engine, a police car, or an engineering rescue vehicle.

Another embodiment of this application provides a signal detection apparatus. The apparatus may be implemented by a software system, a hardware device, or a combination of the software system and the hardware device.

It should be understood that FIG. 6 is merely an example of a schematic diagram of a structure of a signal detection apparatus. Division of function modules for the signal detection apparatus is not limited in this application. As shown in FIG. 6, the signal detection apparatus may be logically divided into a plurality of modules. Each module may have a different function, and a function of each module may be implemented in a manner in which a processor in a computing device reads and executes instructions in a memory. For example, the signal detection apparatus includes a first control module 610, a second control module 620, a first determining module 630, and a fourth determining module 640. Specifically, the first control module 610 receives a first signal of a first sensor through a first processing circuit, and the first control module 610 receives a third signal of a second sensor through a third processing circuit. The second control module 620 receives a second signal of the first sensor through a second processing circuit, and the second control module 620 receives a fourth signal of the second sensor through a fourth processing circuit. The first determining module 630 is configured to use the first signal or the third signal as an input signal of a first controller when a difference between the first signal and the third signal is less than a first threshold. The second determining module 640 is configured to use the second signal or the fourth signal as an input signal of a second controller when a difference between the second signal and the fourth signal is less than a second threshold.

Optionally, the signal detection apparatus further includes a third determining module, configured to use the first signal as the input signal of the first controller when the difference between the first signal and the third signal is not less than the first threshold, and a difference between the first signal and the second signal is less than a third threshold.

Optionally, the signal detection apparatus further includes a fourth determining module, configured to use the third signal as the input signal of the first controller when the difference between the first signal and the third signal is not less than the first threshold, and a difference between the third signal and the fourth signal is less than a fourth threshold.

Optionally, the signal detection apparatus further includes a fifth determining module, configured to use the second signal as the input signal of the second controller when the difference between the second signal and the fourth signal is not less than the second threshold, and a difference between the first signal and the second signal is less than a third threshold.

Optionally, the signal detection apparatus further includes a sixth determining module, configured to use the fourth signal as the input signal of the second controller when the difference between the second signal and the fourth signal is not less than the second threshold, and a difference between the third signal and the fourth signal is less than a fourth threshold.

The first threshold, the second threshold, the third threshold, and the fourth threshold may be the same or different.

For a specific implementation of each functional module in this embodiment, refer to the description in the foregoing method embodiment, and details are not described in this embodiment again.

An embodiment of this application further provides a computing device, including a processor and a memory. The memory stores program instructions. When the program instructions are executed by the processor, the processor performs the method in an embodiment corresponding to FIG. 2 or each optional embodiment in the embodiment corresponding to FIG. 2.

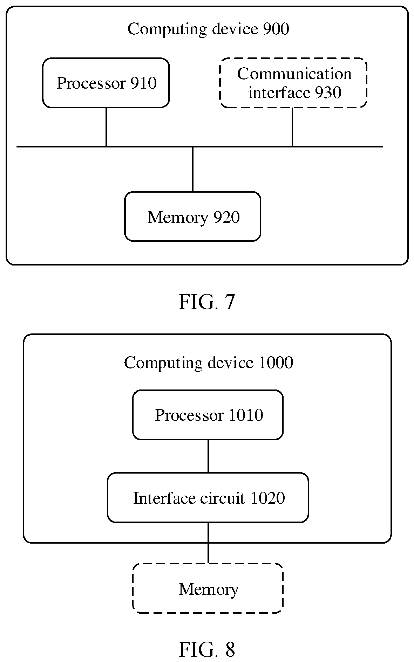

FIG. 7 is a schematic diagram of a structure of a computing device 900 according to an embodiment of this application. The computing device 900 includes a processor 910 and a memory 920.

It should be understood that the computing device 900 shown in FIG. 7 may further include a communication interface 930, which may be configured to communicate with another device.

The processor 910 may be connected to the memory 920. The memory 920 may be configured to store program code and data. Therefore, the memory 920 may be a storage unit in the processor 910, an external storage unit independent of the processor 910, or a component including the storage unit in the processor 910 and the external storage unit independent of the processor 910.

Optionally, the computing device 900 may further include a bus. The memory 920 and the communication interface 930 may be connected to the processor 910 through the bus. The bus may be a peripheral component interconnect (Peripheral Component Interconnect, PCI) bus, an extended industry standard architecture (Extended Industry Standard Architecture, EISA) bus, or the like. The bus may be classified into an address bus, a data bus, a control bus, and the like.

It should be understood that, in this embodiment of this application, the processor 910 may be a central processing unit (central processing unit, CPU). The processor may further be another general-purpose processor, a digital signal processor (digital signal processor, DSP), an application specific integrated circuit (Application specific integrated circuit, ASIC), a field programmable gate array (field programmable gate Array, FPGA), another programmable logic component, a discrete gate or transistor logic component, a discrete hardware assembly, or the like. The general-purpose processor may be a microprocessor, or the processor may be any conventional processor or the like. Alternatively, the processor 910 uses one or more integrated circuits, and is configured to execute a related program, to implement the technical solutions according to the embodiments of this application.

The memory 920 may include a read-only memory and a random access memory, and provides an instruction and data to the processor 910. A part of the processor 910 may further include a non-volatile random access memory. For example, the processor 910 may further store device type information.

When the computing device 900 runs, the processor 910 executes computer-executable instructions in the memory 920 to perform operation steps of the foregoing signal detection method.

It should be understood that the computing device 900 according to this embodiment of this application may correspond to a corresponding entity that performs the method according to the embodiments of this application. In addition, the foregoing and another operation and/or function of each module in the computing device 900 are respectively intended to implement corresponding procedures of each method in this embodiment. For brevity, details are not described herein again.

An embodiment of this application further provides another computing device. FIG. 8 is a schematic diagram of a structure of another computing device 1000 according to this embodiment, including: a processor 1010 and an interface circuit 1020. The processor 1010 accesses a memory through the interface circuit 1020. The memory stores program instructions, and when the program instructions are executed by the processor, the processor performs the method according to the foregoing embodiment. In addition, the computing device may further include a communication interface, a bus, and the like. For details, refer to the description in the embodiment shown in FIG. 7. Details are not described in detail again. For example, the interface circuit 1020 may be a CAN bus or an LIN bus.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the prior art, some of the technical solutions may be implemented in the form of a software product. The computer software product is stored in a storage medium and includes several instructions for instructing a computing device (which may be a personal computer, a server, a network device, or the like) to perform all or some of the steps of the methods described in the embodiments of this application. The storage medium includes any medium that can store program code, such as a USB flash drive, a removable hard disk, a read-only memory (Read-Only Memory, ROM), a random access memory (Random Access Memory, RAM), a magnetic disk, or a compact disc.

An embodiment of this application further provides a computer-readable storage medium storing a computer program. When the program is executed by a processor, the program is used to perform a signal detection method. The method includes at least one of the solutions described in the foregoing embodiments.

The computer storage medium according to the embodiment of this application may be any combination of one or more computer-readable media. The computer-readable medium may be a computer-readable signal medium or a computer-readable storage medium. The computer-readable storage medium may be but is not limited to an electric, magnetic, optical, electromagnetic, infrared, or semiconductor system, apparatus, or device, or any combination thereof. More specific examples (a non-exhaustive list) of the computer-readable storage medium include an electrical connection having one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof. In this document, the computer-readable storage medium may be any tangible medium including or storing a program that may be used by an instruction execution system, apparatus, or device, or be used in combination with an instruction execution system, apparatus, or device.

A computer-readable signal medium may include a data signal propagated in a baseband or propagated as part of a carrier, where the data signal carries computer-readable program code. Such a propagated data signal may take a variety of forms, including but not limited to an electromagnetic signal, an optical signal, or any suitable combination thereof. The computer-readable signal medium may alternatively be any computer-readable medium other than the computer-readable storage medium. The computer-readable medium may send, propagate, or transmit the program used by the instruction execution system, apparatus, or device, or used in combination with the instruction execution system, apparatus, or device.

The program code included in the computer-readable medium may be transmitted by using any suitable medium, including but not limited to Wi-Fi, a wire, an optical cable, RF, and the like, or any suitable combination thereof.

Computer program code for performing the operations in this application may be written in one or more programming languages, or a combination thereof. The programming languages include an object-oriented programming language, such as Java, Smalltalk, and C++, and also include a conventional procedural programming language, such as a "C" language or a similar programming language. The program code may be executed entirely on a user computer, or some may be executed on a user computer as a separate software package, or some may be executed on a user computer while some is executed on a remote computer, or the code may be entirely executed on a remote computer or a server. When a remote computer is involved, the remote computer may be connected to a user computer by using any type of network, including a local area network (LAN) or a wide area network (WAN), or may be connected to an external computer (for example, connected by using an Internet service provider through the Internet).

It should be noted that the foregoing are merely examples of embodiments and technical principles of this application. A person skilled in the art may understand that this application is not limited to specific embodiments described herein, and a person skilled in the art may make various obvious changes, readjustments, and replacements without departing from the protection scope of this application. Therefore, although this application is described in detail by using the foregoing embodiments, this application is not limited to the foregoing embodiments, and may further include more other equivalent embodiments without departing from the concept of this application, which all fall within the protection scope of this application.

## Claims

1. A signal detection circuit, comprising: a first processing circuit, a second processing circuit, a third processing circuit, a fourth processing circuit, a first controller, and a second controller, wherein
the first processing circuit, the second processing circuit, the third processing circuit, and the fourth processing circuit are configured to perform filtering and voltage regulation on respective input signals;
both an output end of the first processing circuit and an output end of the third processing circuit are connected to an input end of the first controller;
both an output end of the second processing circuit and an output end of the fourth processing circuit are connected to an input end of the second controller; and
the first controller is communicatively connected to the second controller.

2. The circuit according to claim 1, further comprising: a first sensor and a second sensor, wherein
the first sensor and the second sensor are configured to detect a torque signal and an angle signal;
an output end of the first sensor is connected to an input end of the first processing circuit, and the output end of the first sensor is further connected to an input end of the second processing circuit; and
an output end of the second sensor is connected to an input end of the third processing circuit, and the output end of the second sensor is further connected to an input end of the fourth processing circuit.

3. The circuit according to claim 1 or 2, wherein the first processing circuit comprises: a voltage regulation circuit and a filter circuit;
an input end of the voltage regulation circuit is the input end of the first processing circuit, and an output end of the voltage regulation circuit is connected to an input end of the filter circuit; and
an output end of the filter circuit is the output end of the first processing circuit.

4. The circuit according to claim 3, wherein the voltage regulation circuit comprises: a first power supply and a first resistor;
the first power supply is connected to the first resistor, and a joint between the first power supply and the first resistor is used as the input end of the voltage regulation circuit; and
one end that is away from the first power supply and is of the first resistor is used as the output end of the voltage regulation circuit.

5. The circuit according to claim 3, wherein the filter circuit comprises: a second resistor, a third resistor, a first capacitor, and a second capacitor;
a first end of the second resistor is the input end of the filter circuit, and a second end of the second resistor is connected to a first end of the first capacitor;
a first end of the third resistor is connected to the second end of the second resistor, and a second end of the third resistor is connected to a first end of the second capacitor; and
a second end of the first capacitor is connected to a second end of the second capacitor, and the second end of the first capacitor is further connected to a first ground end.

6. The circuit according to any one of claims 1 to 5, wherein the first controller and the second controller are further configured to control a three-phase winding of a motor.

7. The circuit according to any one of claims 1 to 3, wherein the first processing circuit, the second processing circuit, the third processing circuit, and the fourth processing circuit are redundant processing circuits for each other.

8. The circuit according to claim 1 or 6, wherein the first controller and the second controller are redundant controllers for each other.

9. The circuit according to claim 2, wherein the first sensor and the second sensor are redundant sensors for each other.

10. A signal detection method, comprising:
receiving a first signal of a first sensor through a first processing circuit, and receiving a third signal of a second sensor through a third processing circuit;
receiving a second signal of the first sensor through a second processing circuit, and receiving a fourth signal of the second sensor through a fourth processing circuit;
using the first signal or the third signal as an input signal of a first controller when a difference between the first signal and the third signal is less than a first threshold; and
using the second signal or the fourth signal as an input signal of a second controller when a difference between the second signal and the fourth signal is less than a second threshold.

11. The method according to claim 10, further comprising:
using the first signal as the input signal of the first controller when the difference between the first signal and the third signal is not less than the first threshold, and a difference between the first signal and the second signal is less than a third threshold.

12. The method according to claim 10, further comprising:
using the third signal as the input signal of the first controller when the difference between the first signal and the third signal is not less than the first threshold, and a difference between the third signal and the fourth signal is less than a fourth threshold.

13. The method according to claim 10, further comprising:
using the second signal as the input signal of the second controller when the difference between the second signal and the fourth signal is not less than the second threshold, and a difference between the first signal and the second signal is less than a third threshold.

14. The method according to claim 10, further comprising:
using the fourth signal as the input signal of the second controller when the difference between the second signal and the fourth signal is not less than the second threshold, and a difference between the third signal and the fourth signal is less than a fourth threshold.

15. A signal detection apparatus, comprising:
a first control module, configured to receive a first signal of a first sensor through a first processing circuit, and receive a third signal of a second sensor through a third processing circuit;
a second control module, configured to receive a second signal of the first sensor through a second processing circuit, and receive a fourth signal of the second sensor through a fourth processing circuit;
a first determining module, configured to use the first signal or the third signal as an input signal of a first controller when a difference between the first signal and the third signal is less than a first threshold; and
a second determining module, configured to use the second signal or the fourth signal as an input signal of a second controller when a difference between the second signal and the fourth signal is less than a second threshold.

16. The apparatus according to claim 15, further comprising:
a third determining module, configured to use the first signal as the input signal of the first controller when the difference between the first signal and the third signal is not less than the first threshold, and a difference between the first signal and the second signal is less than a third threshold.

17. The apparatus according to claim 15, further comprising:
a fourth determining module, configured to use the third signal as the input signal of the first controller when the difference between the first signal and the third signal is not less than the first threshold, and a difference between the third signal and the fourth signal is less than a fourth threshold.

18. The apparatus according to claim 15, further comprising:
a fifth determining module, configured to use the second signal as the input signal of the second controller when the difference between the second signal and the fourth signal is not less than the second threshold, and a difference between the first signal and the second signal is less than a third threshold.

19. The apparatus according to claim 15, further comprising:
a sixth determining module, configured to use the fourth signal as the input signal of the second controller when the difference between the second signal and the fourth signal is not less than the second threshold, and a difference between the third signal and the fourth signal is less than a fourth threshold.

20. A steering system, comprising: the signal detection circuit according to any one of claims 1 to 9, a first drive circuit, a second drive circuit, a first three-phase winding, and a second three-phase winding, wherein
a first controller in the signal detection circuit, the first drive circuit, and the first three-phase winding are sequentially connected; and
a second controller in the signal detection circuit, the second drive circuit, and the second three-phase winding are sequentially connected.

21. A vehicle, comprising the steering system according to claim 20.

22. A computer-readable storage medium storing program instructions, wherein when the program instructions are executed by a computer, the computer performs the signal detection method according to any one of claims 10 to 14.
